# EUROPÄISCHE PATENTSCHRIFT

(11) **EP 4 136 010 B1**
(45) Veröffentlichungstag und Bekanntmachung des Hinweises auf die Patenterteilung: **27.08.2025**
(21) Anmeldenummer: 21719553.6
(22) Anmeldetag: 13.04.2021
(51) Int. Cl.: B62D 1/185

(54) **LENKSÄULE FÜR EIN KRAFTFAHRZEUG**
STEERING COLUMN FOR A MOTOR VEHICLE
COLONNE DE DIRECTION POUR VÉHICULE À MOTEUR

(30) Priorität: 16.04.2020 DE 102020204802
(43) Veröffentlichungstag der Anmeldung: 22.02.2023
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); BLÄTTLER, Simon, 9472 Grabs (CH); KREUTZ, Daniel, 6800 Feldkirch (AT)
(74) Vertreter: thyssenkrupp Intellectual Property GmbH
(86) Internationale Anmeldenummer: PCT/EP2021/059487
(87) Internationale Veröffentlichungsnummer: WO 2021/209410

(56) Entgegenhaltungen:
- EP-A2- 0 979 768
- DD-A1- 264 894
- DE-A1- 102010 020 087
- KR-B1- 101 615 224
- KR-U- 19980 054 345
- US-A- 2 779 208
- US-A- 6 152 488

## Beschreibung

### Stand der Technik

Die Erfindung betrifft eine verstellbare Lenksäule, für ein Kraftfahrzeug, umfassend eine von einer Trageinheit gehaltene Manteleinheit, in der eine Lenkspindel um eine Längsachse in einem Innenmantel drehbar gelagert ist, der in mindestens einer Verstellrichtung um einen Verstellweg relativ zu der Trageinheit verstellbar ist, wobei zwischen dem Innenmantel und der Trageinheit mindestens eine Begrenzungsvorrichtung zur Begrenzung des Verstellwegs eines abzubremsenden Bauteils angeordnet ist, die eine in Verstellrichtung wirksame Anschlagdämpfungsvorrichtung aufweist, die einen geschwindigkeitsabhängigen Dämpfer aufweist.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung von Lenkbefehlen angebracht ist. Die Lenkspindel ist in der Stelleinheit in einem inneren Mantelrohr, auch kurz Mantelrohr oder Innenmantel genannt, um ihre Längsachse drehbar gelagert. Der Innenmantel ist in einem Außenmantel einer Manteleinheit, auch als Kastenschwinge oder Führungskasten bezeichnet, aufgenommen, die über eine Trageinheit an der Fahrzeugkarosserie gehalten wird.

Zur Einstellung einer ergonomisch günstigen Lenkradposition ist bei im Stand der Technik bekannten verstellbaren Lenksäulen eine Verstellung der Stelleinheit mit dem daran angebrachten Lenkrad relativ zur karosseriefesten Trageinheit möglich. Zur Darstellung einer Längsverstellung kann der Innenmantel relativ zur Manteleinheit in Längsrichtung, d.h. der Verstellrichtung in Richtung der Längsachse verstellbar sein. Eine Höhenverstellung kann dadurch realisiert sein, dass die Manteleinheit samt Innenmantel senkrecht in Höhenrichtung, mit quer zur Längsachse stehender Verstellrichtung relativ zur Trageinheit verstellbar ist.

Eine Längsverstellung kann beispielsweise durch eine teleskopartige Anordnung des Innenmantels, auch als Innenmantelrohr oder kurz als Mantelrohr bezeichnet, in einem äußeren Mantelrohr der Manteleinheit, auch als Außenmantelrohr oder Außenmantel bezeichnet, verwirklicht sein. Zur Höhenverstellung, die einzeln oder bevorzugt in Kombination mit einer Längsverstellung ausgebildet sein kann, ist die Manteleinheit beispielsweise um eine horizontale Schwenkachse verschwenkbar an der Trageinheit gelagert, so dass das hintere, das Lenkrad aufweisende Ende des Innenmantels mit der Lenkspindel nach oben oder unten verschwenkt werden kann, wie beispielweise in der DE 10 2016 220140 A1 beschrieben ist.

Zur Vorgabe des maximal möglichen Verstellwegs ist es bekannt, zwischen dem Innenmantel und der Trageinheit für jede Verstellrichtung mindestens eine Begrenzungsvorrichtung, vorzugsweise jeweils als Anschlag an beiden Enden des Verstellwegs für eine Verstellrichtung, anzuordnen, beispielsweise zur Auszugs- und Einschubbegrenzung bei der Längenverstellung. Eine Begrenzungsvorrichtung weist jeweils in Verstellrichtung gegeneinander weisende Anschläge, wie etwa Anschlagelemente oder -flächen auf, die am Ende des Verstellwegs gegeneinander anschlagen und die weitere Verstellung blockieren.

Um eine unerwünschte Geräuschentwicklung durch einen harten Aufprall zu reduzieren und eine als unangenehm empfundene Haptik zu vermeiden, wird in der KR 101615224 B1 vorgeschlagen, zwischen den Anschlägen der Begrenzungsvorrichtung eine Anschlagdämpfungsvorrichtung anzuordnen. Diese weist einen Puffer aus gummielastischen Material auf, der beim Anschlag der Stelleinheit elastisch verformt wird und den Aufprall dämpft. Dadurch wird das Aufprallgeräusch verringert. Nachteilig ist jedoch beim Einstellen einer Endposition, dass die Stelleinheit am Endanschlag von dem Puffer entgegen der Verstellrichtung aus der Endposition elastisch zurückfedert, insbesondere wenn sie mit relativ hoher Verstellgeschwindigkeit anschlägt. Dadurch muss die Stelleinheit nochmals bis in die Endposition verstellt werden.

Eine Lenksäule der eingangs genannten Art ist beispielsweise aus der
DE 10 2010 020087 A1, KR 1998 0054345 U, US 2,779,208 A oder der DD 264 894 A1 bekannt. Nachteilig daran ist, dass im Anschlag keine eindeutig definierte Endposition des zu bremsenden Bauteil im Endanschlag gewährleistet werden kann.

Angesichts der vorangehend erläuterten Problematik ist es eine Aufgabe der vorliegenden Erfindung, eine verstellbare Lenksäule mit einem verbesserten Anschlagverhalten anzugeben.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer verstellbaren Lenksäule, für ein Kraftfahrzeug, umfassend eine von einer Trageinheit gehaltene Manteleinheit, in der eine Lenkspindel um eine Längsachse in einem Innenmantel drehbar gelagert ist, der in mindestens einer Verstellrichtung um einen Verstellweg relativ zu der Trageinheit verstellbar ist, wobei zwischen dem Innenmantel und der Trageinheit mindestens eine Begrenzungsvorrichtung zur Begrenzung des Verstellwegs eines abzubremsenden Bauteils angeordnet ist, die eine in Verstellrichtung wirksame Anschlagdämpfungsvorrichtung aufweist, die einen geschwindigkeitsabhängigen Dämpfer aufweist, ist erfindungsgemäß vorgesehen, dass die Anschlagdämpfungsvorrichtung eine Einzugsvorrichtung aufweist, die einen Kraftspeicher umfasst, der beim Erreichen der Begrenzungsvorrichtung an das relativ zum Dämpfer bewegte, abzubremsende Bauteil angekoppelt wird, und eine Einzugskraft in Richtung auf einer Endposition am Ende des Verstellwegs zu ausübt.

Erfindungsgemäß ist vorgesehen, dass die Anschlagdämpfungsvorrichtung eine Einzugsvorrichtung aufweist. Die Einzugsvorrichtung umfasst einen Kraftspeicher, der beim Erreichen der Begrenzungsvorrichtung an das relativ zum Dämpfer bewegte, abzubremsende Bauteil, beispielsweise den Innenmantel, angekoppelt wird, und eine Einzugskraft in Richtung auf den Endanschlag zu ausübt, also entgegen der Wirkrichtung des Dämpfers. Dadurch wird sichergestellt, dass auch dann, wenn die Verstellgeschwindigkeit so klein ist, dass durch den Dämpfer eine Abbremsung bis zum Stillstand erfolgen würde, noch bevor die Endposition der Begrenzungsvorrichtung vollständig erreicht wäre, die relative Endposition erreicht wird. Beispielsweise wird durch die Einzugsvorrichtung bei der vorangehend beschriebenen Ausführung der Stößel bis in die Endposition in das Dämpfergehäuse eingezogen.

Der geschwindigkeitsabhängige Dämpfer bewirkt beim Auftreffen im Wesentlichen eine Abbremsung, also eine allmähliche Verringerung der Verstellgeschwindigkeit durch Absorption der kinetischen Energie, beispielsweise durch Umwandlung in Reibungswärme. Entsprechend wirkt eine hohe Bremskraft, und die Stelleinheit wird stark abgebremst, wenn sie mit hoher Verstellgeschwindigkeit auf den Dämpfer auftrifft. Die Stelleinheit wird durch das Innenmantelrohr und die darin gelagerte Lenkspindel gebildet. Die Abbremsung erfolgt in eine Wirkrichtung des Dämpfers entgegen der Verstellrichtung. Im Verlauf der Abbremsung durch den Dämpfer nimmt die Bewegungsgeschwindigkeit der Stelleinheit bis zum Stillstand ab, und damit einhergehend sinkt die wirkende Bremskraft bis auf null ab. Wenn die Stelleinheit zur Ruhe gekommen ist, also die relative Geschwindigkeit null beträgt, übt der erfindungsgemäße Dämpfer keine Kraft in oder entgegen der Verstellrichtung aus.

Ein wesentlicher Vorteil eines geschwindigkeitsabhängigen Dämpfers ist, dass keine oder zumindest keine störenden elastischen Rückstellkräfte beim Anschlag auftreten. Der Innenmantel oder die Manteleinheit federn nicht oder zumindest nicht merklich beim Erreichen eines Endanschlags zurück.

Der Dämpfer kann bevorzugt so ausgestaltet und bemessen sein, dass er eine Energieabsorptionskapazität aufweist, die mindestens gleich einer im Betrieb maximal zu erwartenden kinetischen Energie des Innenmantels bei einer Längsverstellung oder der Manteleinheit bei einer Höhenverstellung bei einer maximal auftretenden Verstellgeschwindigkeit entspricht. Dadurch kann sichergestellt werden, dass der Innenmantel oder die Manteleinheit durch den Dämpfer im Endanschlag bis zum Stillstand abgebremst werden kann, und nicht zurückfedert.

Durch den erfindungsgemäß geschwindigkeitsabhängigen Dämpfer kann die Lenksäule sicher gedämpft in einen Endanschlag überführt werden, wobei kein Zurückfedern wie im Stand der Technik auftritt, und Störgeräusche vermieden und eine angenehme Haptik erreicht werden.

Es ist möglich, dass die Begrenzungsvorrichtung zwischen der Manteleinheit und dem darin in Längsrichtung verstellbar aufgenommenen Innenmantel angeordnet ist. Entsprechend ist mindestens eine erfindungsgemäße Anschlagdämpfungsvorrichtung zwischen einem Außenrohr der Manteleinheit, in dem der Innenmantel in Längsrichtung bevorzugt teleskopierend verschiebbar aufgenommen ist. Zwischen dem Innen- und Außenmantel können gegebenenfalls ein oder mehrere weitere Zwischenmantelrohre eingesetzt sein, so dass eine mehrfache Teleskopanordnung gebildet wird. Mindestens eine Anschlagdämpfungsvorrichtung kann zwischen dem Innenmantel und dem Außenmantel angeordnet sein, oder dem Innen- und/oder Außenmantel und einem zwischen Innen- und Außenmantel eingesetzten längsverstellbaren Zwischenmantel einer mehrfachen Teleskopanordnung. Am Endanschlag bei teleskopierenden Ein- oder Ausfahren zur Längsverstellung schlägt der Innenmantel an dem Dämpfer an und wird abgebremst, mit anderen Worten bildet der Innenmantel ein abzubremsendes Bauteil der Lenksäule.

Zusätzlich oder alternativ zu der vorgenannten Ausführung kann vorgesehen sein, dass die Begrenzungsvorrichtung zwischen der Trageinheit und der Manteleinheit angeordnet ist. Dazu kann mindestens ein Dämpfer zwischen Trageinheit und Manteleinheit angeordnet sein. Dadurch kann der Anschlag bei Verstellung in der Höhenrichtung gedämpft werden, bei der der Innenmantel zusammen mit der Manteleinheit relativ zur Trageinheit nach oben oder unten verstellt wird. In diesem Fall bildet die Manteleinheit ein abzubremsendes Bauteil der Lenksäule.

Es kann vorgesehen sein, dass ein Dämpfer vorgesehen ist, der den Endanschlag eines abzubremsenden Bauteils in einer Verstellrichtung dämpft, beispielsweise in Längsrichtung beim Einfahren des Innenmantels in die Manteleinheit, oder in Höhenrichtung bei einer Verstellung nach unten.

Eine vorteilhafte Weiterbildung ist, dass eine Begrenzungsvorrichtung zwei in entgegengesetzten Verstellrichtungen wirksame Dämpfer aufweist. Dabei ist jeweils ein Dämpfer angeordnet zur Dämpfung des Anschlags in Verstellrichtung, und einer in der entgegengesetzten Verstellrichtung. Dadurch kann ein weicher, gedämpfter Anschlag in beiden möglichen Endpositionen der Verstellung realisiert sein.

Ein erfindungsgemäßer Dämpfer kann bevorzugt eine lineare Reibungsbremse aufweisen. Eine lineare Reibungsbremse absorbiert die beim Endanschlag von einem abzubremsenden Bauteil eingeleitete kinetische Energie, d.h. setzt sie im Wesentlichen vollständig in Reibungswärme um. Dabei wird von dem Dämpfer in dessen Wirkrichtung eine der Verstellrichtung entgegengesetzte geschwindigkeitsabhängige Bremskraft ausgeübt. Vorteilhaft ist dabei, dass im Wesentlichen keine elastische Rückstellkraft gegen die abzubremsende Verstellbewegung auftritt. Eine Reibungsbremse kann in einem Reibdämpfer durch Grenzflächenreibung zwischen gegeneinander bewegbaren, im Reibkontakt stehende Reibflächen realisiert sein, oder durch Fluidreibung in einem Fluiddämpfer durch Verdrängung eines Fluids, beispielsweise einer viskosen Flüssigkeit oder eines Gases.

Eine vorteilhafte Ausführung der Erfindung sieht vor, dass der Dämpfer einen in einer Verstellrichtung vorstehenden Stößel aufweist, der in einem Dämpfergehäuse in Verstellrichtung geschwindigkeitsgedämpft zwischen einer Kontaktposition und einer Endposition bewegbar ist. Das Dämpfergehäuse kann an der Manteleinheit, der Trageinheit oder dem Innenmantel festgelegt sein, und der Stößel entgegen der Verstellrichtung am Anschlag davon vorstehen. Beim Anschlag wird der Stößel von dem relativ zum Dämpfergehäuse verstellten, abzubremsenden Bauteil, also dem Innenmantel, der Mantel- oder Trageinheit in der Kontaktposition kontaktiert und geschwindigkeitsabhängig gebremst, beispielsweise reibungsgebremst relativ zum Dämpfergehäuse in Richtung auf eine Endposition, entgegen der Wirkrichtung des Dämpfers, bewegt, die den Endanschlag definiert. Im Verlauf eines Bremswegs zwischen der Kontaktposition, welche die Startposition der Bewegung des Stößels bezeichnet, und der Endposition wird eine definierte Abbremsung bewirkt, beispielsweise durch Kontaktflächen- oder Fluidreibung zwischen dem Stößel und dem Dämpfergehäuse. Derartige Dämpfer sind beispielsweise als sogenannte Teleskopdämpfer bekannt, bei denen der Stößel kolbenartig im Dämpfergehäuse verschiebbar aufgenommen ist. Ein Vorteil ist, dass während der gedämpften Bewegung im Wesentlichen keine Rückstellkräfte zwischen Stößel und Dämpfergehäuse wirken. Die Dämpfercharakteristik kann mit geringem Aufwand durch die Länge des Bremswegs und den Energieabsorptionsmechanismus vorgegeben und an die kinetische Energie beim Verstellen der Lenksäule angepasst werden, um einen weichen, leisen und als haptisch angenehm empfundenen Anschlag zu realisieren.

Bei einer Einzugsvorrichtung kann vorgesehen sein, dass sie ein parallel zum Dämpfer angeordnetes Federelement aufweist. Das Federelement dient als Kraftspeicher und kann beispielsweise eine Zugfeder aufweisen, die eine beim Anschlag zwischen Stößel und Dämpfergehäuse an eine von der Kontaktposition zur Endposition gerichtete Einzugskraft ausübt.

Bevorzugt weist die Einzugsvorrichtung eine Fangvorrichtung auf. Die Fangvorrichtung umfasst eine lösbare Koppelvorrichtung, die mit einem Koppelelement eines relativ zum Dämpfer bewegten, abzubremsenden Bauteils, beispielsweise dem Innenmantel, lösbar koppelbar ist. Beim Anschlag wird das abzubremsende Bauteil, beispielsweise der Innenmantel lösbar mit der Fangvorrichtung verbunden, die ihrerseits mit dem Kraftspeicher verbunden ist, beispielsweise mit einem als Zugfeder ausgebildeten Federelement. In dem angekoppelten Zustand kann das angekoppelte abzubremsende Bauteil durch die Einzugskraft bis in die Endposition eingezogen werden.

Bevorzugt ist die Fangvorrichtung umschaltbar zwischen einer relativ zum Dämpfer fixierten Bereitschaftsstellung und einer relativ zum Dämpfer bewegbaren Einzugsstellung. In der Bereitschaftsstellung hält die Fangvorrichtung den Kraftspeicher in einem vorgespannten Zustand. Bei der Verstellung in Richtung auf den Anschlag wird das abzubremsende Bauteil mit einem Koppelelement an die Fangvorrichtung angekoppelt. Beim Ankoppeln betätigt das Koppelelement die Fangvorrichtung und schaltet dieses in die Einzugsstellung um. Dadurch kann die Fangvorrichtung durch die Einzugskraft des Kraftspeichers mit dem daran angekoppelten abzubremsenden Bauteil bis in die Endposition des Dämpfers eingezogen werden. Der Vorteil ist, dass das abzubremsende Bauteil, beispielsweise der Innenmantel, auch bei einer langsamen Verstellgeschwindigkeit am Anschlag durch den Kraftspeicher selbsttätig bis in die Endposition eingezogen wird, beispielsweise wird der Innenmantel bis in die vollständig eingefahrene Endposition in der Manteleinheit bewegt. Dadurch wird der Bedienungskomfort der Lenksäule erhöht.

Die Fangvorrichtung weist eine Verriegelung auf, so dass das Koppelelement des abzubremsenden Bauteils nur in der Bereitschaftsstellung ankoppelbar und lösbar ist, aber in der Einzugsstellung nicht lösbar ist und fixiert bleibt.

Die Manteleinheit kann eine Fixiereinrichtung zur lösbaren Fixierung des Innenmantels und/oder der Trageinheit aufweisen. Die Fixiereinrichtung kann manuell oder motorisch betätigbar ausgestaltet sein und wahlweise in eine Fixier- oder Lösestellung gebracht werden. In der Fixierstellung sind die relativ zueinander verstellbaren Bauteile fixiert, beispielsweise der Innenmantel mit der Manteleinheit, oder die Manteleinheit mit der Trageinheit. In der Lösestellung ist die Verstellung freigegeben. Die Fixiereinrichtung kann beispielsweise eine form- und/oder kraftschlüssig in Eingriff bringbare Klemm-, Spann-, Sperr- oder Rasteinrichtung umfassen.

Weiters wird zur Lösung der genannten Aufgabe eine Lenksäule für ein Kraftfahrzeug vorgeschlagen, umfassend eine von einer Trageinheit gehaltene Manteleinheit, in der eine Lenkspindel um eine Längsachse in einem Innenmantel drehbar gelagert ist, der in mindestens einer Verstellrichtung um einen Verstellweg relativ zu der Trageinheit verstellbar ist, wobei zwischen dem Innenmantel und der Trageinheit mindestens eine Begrenzungsvorrichtung zur Begrenzung des Verstellwegs angeordnet ist, die eine in Verstellrichtung wirksame Anschlagdämpfungsvorrichtung aufweist. Erfindungsgemäß ist die Anschlagdämpfungsvorrichtung derart angeordnet, dass diese die Bewegung des Innenmantels in einer Position zu dämpfen beginnt, wobei die Position in einem Abstand zu dem einen Ende des Verstellwegs angeordnet ist und dieser Abstand größer gleich 5% des Verstellwegs beträgt.

Dank des erfindungsgemäßen Abstandes erfolgt die Dämpfung des Innenmantels bereits bevor dieser das Ende des Verstellbereichs, also die Begrenzung erreicht. Somit kann die Dämpfung der Verstellbewegung des Innenmantels vor dem Erreichen des Endes des Verstellwegs verbessert werden. Der Verstellweg ist die Wegstrecke die, um die das Innenmantelrohr gegenüber der Trageinheit verstellbar ist, d.h. es die Differenz zwischen einer maximal ausgefahrenen Stellung und einer maximal zusammengeschobenen Stellung (Verstaustellung) des Innenmantelrohrs. Der Teil des Verstellwegs, in dem die Dämpfung erfolgt, d.h. die Abbremsung des Innenmantels relativ zur Trageinheit durch die Anschlagdämpfungsvorrichtung, kann auch als Dämpfungs- oder Bremsweg bezeichnet werden. Die Anschlagdämpfungsvorrichtung wird beim Erreichen des Dämpfungswegs aktiv und sorgt für eine bevorzugt geschwindigkeitsabhängige Abbremsung. Erfindungsgemäß ist der Dämpfungsweg größer gleich 5% Verstellwegs.

In einer vorteilhaften Weiterbildung ist der Abstand, bzw. der Dämpfungsweg kleiner gleich 30% des Verstellwegs.

In einer vorteilhaften Weiterbildung ist die Begrenzungsvorrichtung gemäß einer oder mehrerer der zuvor genannten vorteilhaften Weiterbildungen ausgebildet. Beispielsweise kann vorgesehen sein, dass die Anschlagsdämpfungsvorrichtung einen geschwindigkeitsabhängigen Dämpfer mit einem oder mehreren der oben genannten Merkmale umfasst.

Es kann mit Vorteil vorgesehen sein, dass die Lenksäule eine Energieabsorptionseinrichtung aufweist. Zur Verbesserung der Insassensicherheit bei einem Fahrzeugzusammenstoß, dem sogenannten Crashfall, bei dem ein Körper mit hoher Geschwindigkeit auf die Lenkeingabevorrichtung, beispielsweise das Lenkrad aufprallt, kann eine Energieabsorptionseinrichtung vorgesehen sein, die auch als Crash-System bezeichnet wird. Die Energieabsorptionseinrichtung kann zwischen der Manteleinheit und der Trageinheit angeordnet sein, beispielsweise zwischen einem Innenmantel und einem Außenmantel eingekoppelt sein, und alternativ oder zusätzlich zwischen einem der Mäntel und einer Trageinheit, und alternativ oder zusätzlich zwischen einer Trageinheit und einer Karosserie des Kraftfahrzeugs. Wird im Crashfall durch einen auf das Lenkrad auftreffenden Körper eine hohe Kraftspitze auf das Lenkrad ausgeübt, die einen vorgegebenen Grenzwert überschreitet, werden die Manteleinheit und die Trageinheit zusammengeschoben. Dabei kann ein wirkungsmäßig zwischen der Trageinheit und einem der Mäntel der Manteleinheit eingesetztes Energieabsorptionselement der Energieabsorptionseinrichtung die über das Lenkrad eingeleitete kinetische Energie durch Reibung und/oder plastische Verformung in Wärme und Verformungsarbeit umsetzen und dadurch absorbieren, so dass der auf das Lenkrad aufprallende Körper kontrolliert abgebremst wird und die Verletzungsgefahr verringert wird. Es können ein oder mehrere an sich bekannte Energieabsorptionselemente vorgesehen sein, beispielsweise Dehnungs-, Biege-Quetsch- und/oder Reißelemente, die bei einer nur im Crashfall auftretenden Relativbewegung mindestens eines der Mäntel relativ zur Trageinheit unter Energieabsorption plastisch deformiert werden. Dadurch kann ein im Crashfall auf das Lenkrad aufprallender Körper definiert abgebremst werden, um die Verletzungsgefahr zu reduzieren.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,,
- Figur 2: eine vergrößerte Detailansicht von Figur 1,
- Figur 3: eine teilweise geöffnete Schnittansicht der Lenksäule gemäß Figur 1,
- Figur 4: eine Detailansicht einer erfindungsgemäßen Anschlagdämpfungsvorrichtung,
- Figur 5: die Lenksäule gemäß Figur 1 in einer teilweise aufgeschnittenen, schematischen perspektivischen Ansicht in ausgefahrenem Zustand,
- Figur 6: eine vergrößerte Detailansicht von Figur 5,
- Figur 7: die Lenksäule in einer Ansicht wie in Figur 5 in zusammengefahrenem Zustand,
- Figur 8: eine vergrößerte Detailansicht von Figur 7,
- Figur 9: eine schematische Schnittansicht einer Lenksäule in einer ersten Ausführung in ausgefahrenem Zustand,
- Figur 10: die Lenksäule gemäß Figur 9 in zusammengefahrenem Zustand,
- Figur 11: eine schematische Schnittansicht einer Lenksäule in einer zweiten Ausführung in ausgefahrenem Zustand.

### Ausführungsformen der Erfindung

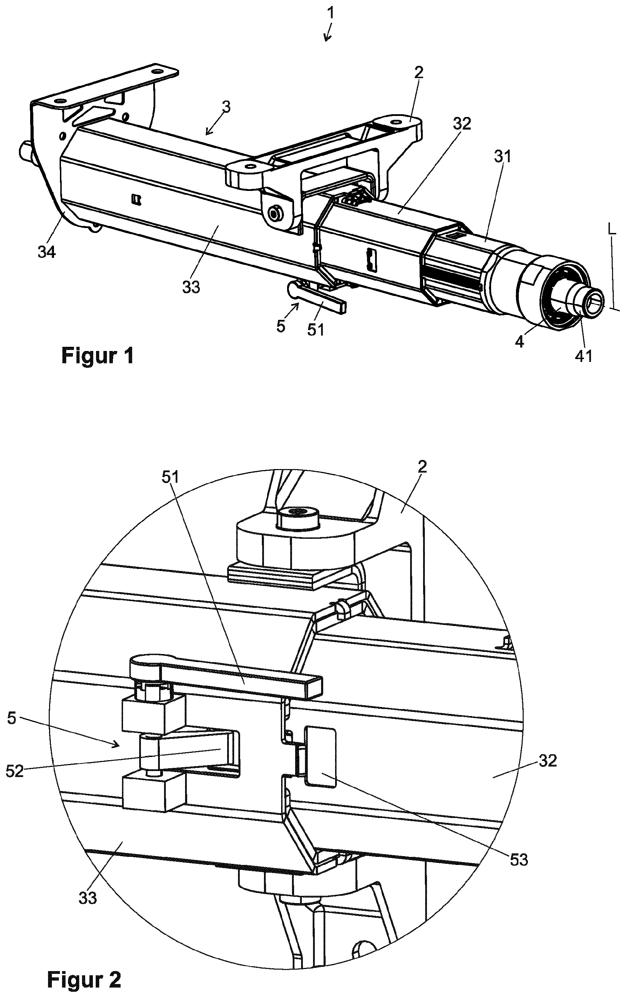

In den verschiedenen Figuren sind gleiche Teile stets mit den gleichen Bezugszeichen versehen und werden daher in der Regel auch jeweils nur einmal benannt bzw. erwähnt. Figur 1 zeigt eine erfindungsgemäße Lenksäule 1, die eine mit einer nicht dargestellten Fahrzeugkarosserie verbindbare Trageinheit 2 aufweist, von der eine Manteleinheit 3 gehalten ist.

Die Manteleinheit 3 umfasst einen Innenmantel 31, in dem eine Lenkspindel 4 um eine Längsachse L drehbar gelagert ist, und die an ihrem in Fahrtrichtung hinteren Ende einen Befestigungsabschnitt 41 zur Anbringung eines nicht dargestellten Lenkrads aufweist.

Der Innenmantel 31 ist als Innenmantelrohr ausgebildet und in einem Zwischenmantelrohr 32 in Längsrichtung teleskopartig verschiebbar aufgenommen, wie mit dem Doppelpfeil angedeutet. Das Zwischenmantelrohr 32 ist ebenfalls teleskopartig verschiebbar in einem Außenmantel 33, der als Außenmantelrohr ausgebildet ist, aufgenommen. Der Innenmantel 31 und die darin drehbar gelagerte Lenkspindel 4 bilden eine Stelleinheit, die gegenüber der Trageinheit 2 verstellbar ist.

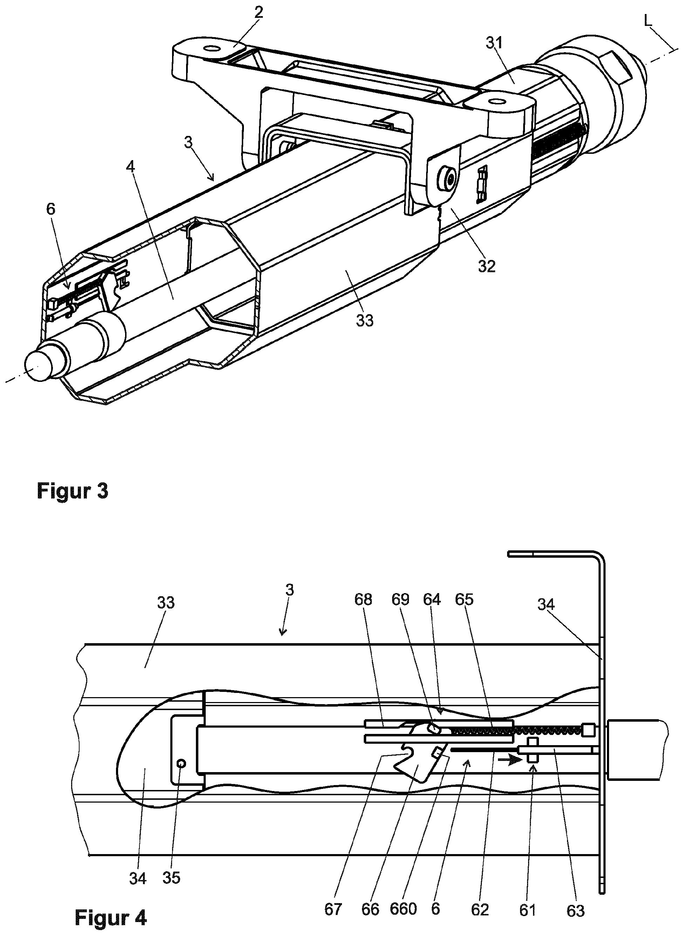

Mittels einer manuellen Fixiervorrichtung 5, die an dem Außenmantel 33 angebracht und in Figur 2 vergrößert dargestellt ist, kann durch manuelle Betätigung eines Fixierhebels 51 eine Sperrklinke 52 mit einer Fixieröffnung 53 an dem Zwischenmantelrohr 32 wahlweise für eine Fixierstellung in oder für eine Freigabestellung außer Eingriff gebracht werden. In Fixierstellung sind der Außenmantel 33 und das Zwischenmantelrohr 32 relativ zueinander in Betriebsposition fixiert. Die Sperrklinke 52 ragt durch die Fixieröffnung 53 hindurch und drückt in der Fixierstellung auf den Innenmantel 31 und setzt diesen gegenüber dem Zwischenmantelrohr 32 fest. In Freigabestellung können das Zwischenmantelrohr 32 und der Innenmantel 31 teleskopierend in dem Außenmantel 33 verstellt werden. In zusammengefahrenem Zustand oder Verstauposition ist das Zwischenmantelrohr 32 so weit wie möglich in den Außenmantel 33 eingefahren - in Figur 1 nach links - und kann beim Einfahren in Richtung gegen einen festen Anschlag 34 bis in eine Endposition (Ende) nach vorn eingeschoben werden. Der Anschlag 34 wird durch eine fest am vorderen Ende des Außenmantels 33 angebrachte Wand gebildet, wie dies in der Seitenansicht von Figur 4 erkennbar ist, in der der Außenmantel 33 teilweise aufgeschnitten dargestellt ist und einen Blick ins Innere der Manteleinheit 3 freigibt.

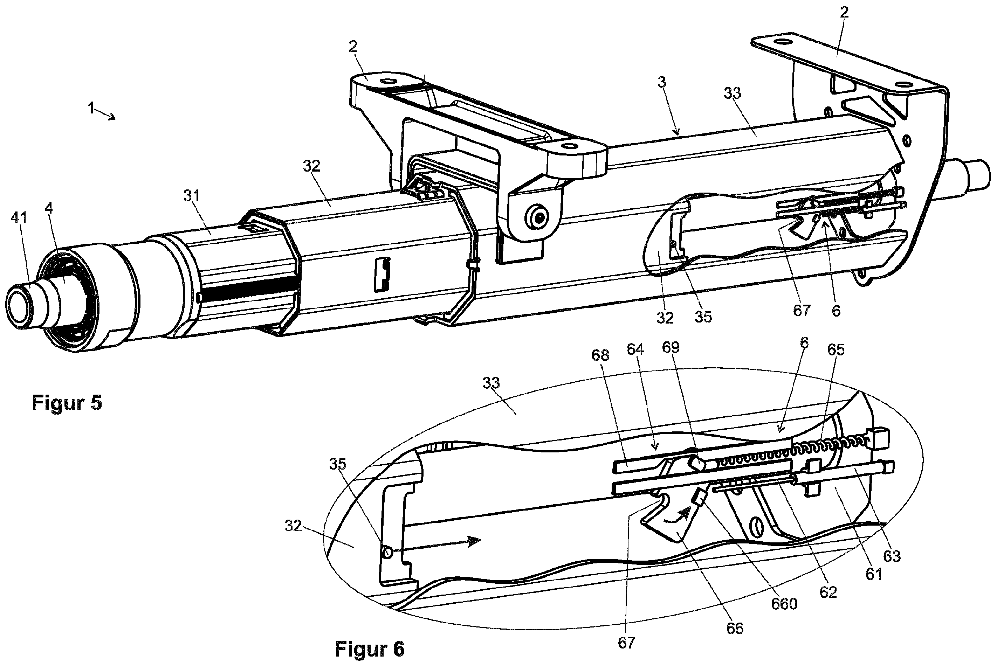

In der perspektivischen Darstellung von Figur 3, die eine Ansicht schräg von vorn zeigt, ist die den Anschlag 34 bildende vordere Wand weggelassen und der Außenmantel 33 teilweise aufgeschnitten dargestellt. Darin ist eine erfindungsgemäße Anschlagdämpfungsvorrichtung 6 erkennbar, die wie in Figur 4 gezeigt, in Längsrichtung relativ zum Anschlag 34 abgestützt ist. Diese Anordnung ist in Figur 5 in einer schematischen perspektivischen Gesamtansicht gezeigt, wobei der Außenmantel wie in Figur 4 teilweise aufgeschnitten ist. Figur 6 zeigt eine vergrößerte Ansicht von Figur 5 in einem ähnlichen Ausschnitt wie Figur 4.

Die Anschlagdämpfungsvorrichtung 6 weist einen geschwindigkeitsabhängigen Dämpfer 61 auf, der als Reib- oder Fluiddämpfer in Form eines Teleskopdämpfers ausgeführt sein kann. Dieser umfasst einen Stößel 62, der in ein rohrförmiges Dämpfergehäuse 63 in Längsrichtung gedämpft eingeschoben werden kann, wie mit dem Pfeil angedeutet ist. In Figuren 4 bis 6 befindet sich der Dämpfer 61 in Ruheposition, in der der Stößel 62 maximal entgegen der Einschubrichtung des Zwischenmantelrohrs 32 - in der Zeichnung nach links - aus dem Dämpfergehäuse 63 vorsteht. Das Dämpfergehäuse 63 ist mit dem Anschlag 34 verbunden.

Die Anschlagdämpfungsvorrichtung 6 umfasst eine Einzugsvorrichtung 64 mit einem Kraftspeicher in Form einer Zugfeder 65, die parallel zum Dämpfer 61 angeordnet ist. Diese ist mit ihrem vorderen Ende zugfest mit dem Anschlag 34 verbunden, und mit ihrem hinteren Ende - in den Darstellungen links - mit einem Fangelement 66 verbunden. Das Fangelement 66 weist einen nach hinten, in Richtung gegen das Zwischenmantelrohr 32 geöffneten Fanghaken 67 auf. In einer Kulissenschiene 68 ist das Fangelement 66 zwangsgeführt. In den Figuren 3 bis 6 befindet sich die Einzugsvorrichtung 64 in Bereitschaftsstellung, in der das Fangelement 66 in Längsrichtung mit einem Gleitstück 69 in der Kulissenschiene 68 fixiert ist, wobei die Zugfeder 65 unter Zugspannung steht und das Fangelement 66 in Richtung auf den Anschlag 34 und den Dämpfer 61 vorspannt.

Im vorderen Bereich weist das Zwischenmantelrohr 32 ein Koppelelement 35 in Form eines seitlich vorstehenden Stifts auf. Aus der in Figur 5 und 6 gezeigten ausgefahrenen Betriebsposition wird beim Einfahren, also mit nach vorn gegen den Anschlag 34 gerichteter Verstellrichtung, wird das Koppelelement 35 wie in Figur 6 mit dem Pfeil angedeutet auf das Fangelement 66 zu bewegt. Sobald es dieses erreicht, greift es in den Fanghaken 67 ein. Dadurch wird das Fangelement 66 verschwenkt, wie in Figur 6 mit dem gebogenen Pfeil angedeutet. Dadurch ist das Koppelelement 35 gefangen, d.h. zugfest mit dem Fangelement 66 gekoppelt. Gleichzeitig wird die Bewegung des Gleitstücks 69 in der Kulissenführung 68 freigegeben.

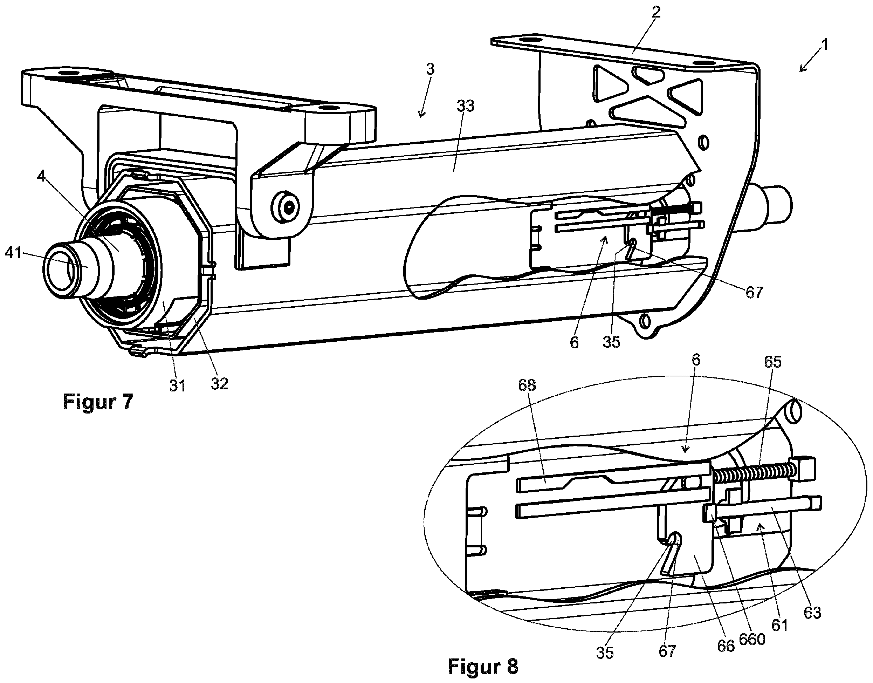

Durch die von der vorgespannten Zugfeder 65 auf das Fangelement 66 ausgeübte Einzugskraft wird dieses nach vorn bis in die in Figur 8 gezeigte Endposition gezogen. Dabei schlägt ein an dem Fangelement ausgebildeter Anschlagvorsprung 660 gegen das frei vorstehende Ende des Stößels 62 an und schiebt diesen in das Dämpfergehäuse 63 ein. Dabei wird die Bewegung geschwindigkeitsabhängig durch eine zwischen dem Stößel 62 und dem Dämpfergehäuse 63 wirkende Energieabsorptionseinrichtung nach dem Prinzip der Reib- oder Fluiddämpfung abgebremst. Dabei wirkt auf das Fangelement 66 keine merkliche Rückstellkraft entgegen der Verstellrichtung beim Einschieben.

Unabhängig von der Verstellgeschwindigkeit sorgt die Zugfeder 65 der Einzugsvorrichtung 64 dafür, dass das Zwischenmantelrohr 32 bis zum Endanschlag in der maximal möglichen zusammengefahrenen Stellung in den Außenmantel 33 eingefahren wird. Dadurch, dass der Innenmantel 31 mit dem Zwischenmantelrohr 32 verbunden ist, bewirkt die erfindungsgemäße Anschlagdämpfungsvorrichtung 6 auch eine Anschlagdämpfung des Innenmantels 31 relativ zum Außenmantel 33.

Beim Ausfahren aus der in den Figuren 7 und 8 gezeigten, zusammengefahrenen Position, auch Verstauposition genannt, in die ausgefahrene Betriebsposition gemäß Figuren 5 und 6 nimmt das Koppelelement 35 den Fanghaken 67 mit und zieht das Fangelement 66 in die Freigabeposition, in der sich das Koppelelement 35 aus dem Fanghaken 68 löst, wobei das Fangelement 66 in die Bereitschaftsstellung zurück verschwenkt wird, entgegen der Richtung des gebogenen Pfeils in Figur 6. Dadurch ist die Zugfeder 65 wieder vorgespannt.

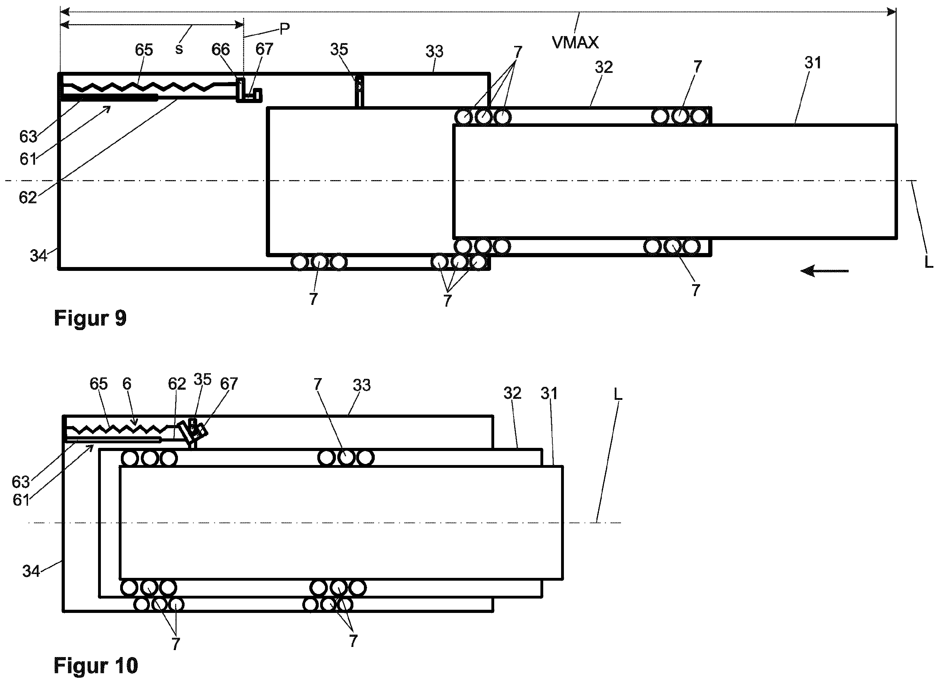

Figuren 9 und 10 zeigen schematisch eine Manteleinheit 3, in der die Mantelrohre 32, 33 und 31 in Verstellrichtung mittels Wälzkörpern 7 leichtgängig linear wälzgelagert sind. In dieser Ausführung ist eine erfindungsgemäße Anschlagdämpfungsvorrichtung 6 im vorderen Bereich in der Nähe des Anschlags 34 an dem Außenmantel 33 fixiert. Dadurch erfolgt eine Anschlagdämpfung beim Einschieben in der mit dem Pfeil angedeuteten Verstellrichtung.

Figur 9 zeigt die schematisierte Manteleinheit 3 in einer maximal ausgefahrenen Position und ist somit auf eine maximale Länge VMAX ausgezogen und somit an einem Ende des Verstellwegs. Das Fanghaken 67 befindet sich in einer Position P und weist einen Abstand s zu dem Anschlag 34 auf. Wenn das Koppelelement 35 mit dem Fanghaken 67 in Wirkeingriff gebracht wird, dieser also an den Fanghaken 67 anschlägt, dann erfolgt die Dämpfung der Bewegung des Innenmantelrohrs 31. Mit anderen Worten beginnt die Anschlagdämpfungsvorrichtung 6 die Bewegung des Innenmantels 31 in einer Position P zu dämpfen, wenn das Koppelelement 35 mit dem Fanghaken 67 in Wirkeingriff tritt. Damit beginnt der Dämpfungsweg in der Position P, und erstreckt sich beim Einschieben bis zum Ende, d.h. der vollständig zusammengeschobenen Stellung. Bevorzugt beträgt der Dämpfungsweg zwischen 5% und 30% des gesamten Verstellwegs.

In der Figur 10 ist die schematisierte Manteleinheit 3 in einer nahezu fast vollständig zusammengeschobenen Stellung dargestellt.

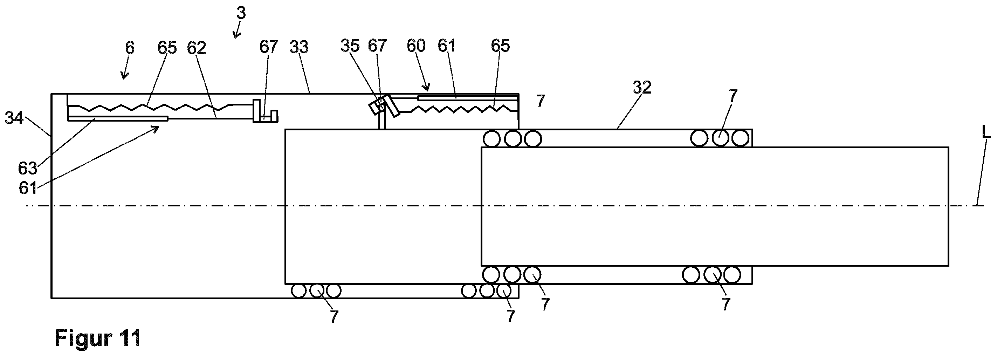

In der in Figur 11 gezeigten Ausführung ist zusätzlich eine im Prinzip gleich aufgebaute Anschlagdämpfungsvorrichtung 6 im hinteren Bereich nahe der Öffnung des Außenmantels 33, in die das Zwischenmantelrohr 32 eintaucht, angeordnet. Dadurch erfolgt eine Anschlagdämpfung beim Herausziehen des Zwischenmantelrohrs 32 aus dem Außenmantel 33 in die Betriebsposition.

Grundsätzlich können Anschlagdämpfungsvorrichtungen 6 und/oder 60 auch direkt zwischen dem Innenmantel 31 und dem Außenmantel 33 angeordnet sein, wenn bei einer einfachen Teleskopanordnung kein Zwischenmantelrohr 32 vorhanden ist, und der Innenmantel 31 direkt in dem Außenmantel teleskopierbar aufgenommen ist. Es ist überdies auch denkbar und möglich, Anschlagdämpfungsvorrichtungen 6 und/oder 60 zwischen dem Innenmantel 31 und dem Zwischenmantelrohr 32 anzuordnen.

### Bezugszeichenliste

- 1: Lenksäule
- 2: Trageinheit
- 3: Manteleinheit
- 31: Innenmantel
- 32: Zwischenmantelrohr
- 33: Außenmantel
- 34: Anschlag
- 35: Koppelelement
- 4: Lenkspindel
- 41: Befestigungsabschnitt
- 5: Fixiervorrichtung
- 51: Fixierhebel
- 52: Sperrklinke
- 53: Fixieröffnung
- 6, 60: Anschlagdämpfungsvorrichtung
- 61: Dämpfer
- 62: Stößel
- 63: Dämpfergehäuse
- 64: Einzugsvorrichtung
- 65: Zugfeder
- 66: Fangelement
- 660: Anschlagvorsprung
- 67: Fanghaken
- 68: Kulissenschiene
- 69: Gleitstück
- 7: Wälzkörper

## Patentansprüche

1. Lenksäule (1) für ein Kraftfahrzeug, umfassend eine von einer Trageinheit (2) gehaltene Manteleinheit (3), in der eine Lenkspindel (4) um eine Längsachse (L) in einem Innenmantel (31) drehbar gelagert ist, der in mindestens einer Verstellrichtung um einen Verstellweg relativ zu der Trageinheit (2) verstellbar ist, wobei zwischen dem Innenmantel (31) und der Trageinheit (2) mindestens eine Begrenzungsvorrichtung zur Begrenzung des Verstellwegs eines abzubremsenden Bauteils (31) angeordnet ist, die eine in Verstellrichtung wirksame Anschlagdämpfungsvorrichtung (6, 60) aufweist, die einen geschwindigkeitsabhängigen Dämpfer (61) aufweist,
**dadurch gekennzeichnet,**
**dass** die Anschlagdämpfungsvorrichtung (6, 60) eine Einzugsvorrichtung (64) aufweist, die einen Kraftspeicher (65) umfasst, der beim Erreichen der Begrenzungsvorrichtung an das relativ zum Dämpfer (61) bewegte, abzubremsende Bauteil (31) angekoppelt wird, und eine Einzugskraft in Richtung auf einer Endposition am Ende des Verstellwegs zu ausübt.

2. Lenksäule nach Anspruch 1, **dadurch gekennzeichnet, dass** die Begrenzungsvorrichtung zwischen der Manteleinheit (3) und dem darin in Längsrichtung verstellbar aufgenommenen Innenmantel (31) angeordnet ist.

3. Lenksäule nach einem der vorangehenden Ansprüche, **dadurch gekennzeichnet, dass** die Begrenzungsvorrichtung zwischen der Trageinheit (2) und der Manteleinheit (3) angeordnet ist.

4. Lenksäule nach einem der vorangehenden Ansprüche, **dadurch gekennzeichnet, dass** eine Begrenzungsvorrichtung zwei in entgegengesetzten Verstellrichtungen wirksame Dämpfer (61) aufweist.

5. Lenksäule nach einem der vorangehenden Ansprüche, **dadurch gekennzeichnet, dass** der Dämpfer (61) eine lineare Reibungsbremse aufweist.

6. Lenksäule nach einem der vorangehenden Ansprüche, **dadurch gekennzeichnet, dass** der Dämpfer (61) einen in einer Verstellrichtung vorstehenden Stößel aufweist, der in einem Dämpfergehäuse (63) in Verstellrichtung geschwindigkeitsgedämpft zwischen einer Kontaktposition und einer Endposition bewegbar ist.

7. Lenksäule nach einem der vorangehenden Ansprüche, **dadurch gekennzeichnet, dass** die Einzugsvorrichtung (64) ein parallel zum Dämpfer (61) angeordnetes Federelement (65) aufweist.

8. Lenksäule nach einem der vorangehenden Ansprüche, **dadurch gekennzeichnet, dass** die Einzugsvorrichtung (64) eine Fangvorrichtung (66) aufweist.

9. Lenksäule nach Anspruch 8, **dadurch gekennzeichnet, dass** die Fangvorrichtung umschaltbar ist zwischen eine relativ zum Dämpfer (61) fixierten Bereitschaftsstellung und einer relativ zum Dämpfer (61) bewegbaren Einzugsstellung.

10. Lenksäule nach einem der vorangehenden Ansprüche, **dadurch gekennzeichnet, dass** die Manteleinheit (3) eine Fixiereinrichtung (5) zur lösbaren Fixierung des Innenmantels (31) und/oder der Trageinheit (2) aufweist.

11. Lenksäule nach einem der vorangehenden Ansprüche,
**dadurch gekennzeichnet,**
**dass** die Anschlagdämpfungsvorrichtung (6, 60) derart angeordnet ist, dass diese die Bewegung des Innenmantels (31) in einer Position (P) zu dämpfen beginnt, wobei die Position (P) in einem Abstand (s) zu dem einen Ende des Verstellwegs angeordnet ist und dieser Abstand (s) größer gleich 5% des Verstellwegs beträgt.

## Claims

1. Steering column (1) for a motor vehicle, comprising a jacket unit (3) which is held by a support unit (2) and in which a steering spindle (4) is mounted rotatably about a longitudinal axis (L) in an inner jacket (31) which is adjustable in at least one adjustment direction by an adjustment travel relative to the support unit (2), at least one limiting device for limiting the adjustment path of a component (31) to be braked being arranged between the inner casing (31) and the support unit (2), which limiting device has a stop damping device (6, 60) which is effective in the direction of adjustment and has a speed-dependent damper (61),
**characterized in**
**in that** the stop damping device (6, 60) has a retraction device (64) which comprises a force accumulator (65) which, when the limiting device is reached, is coupled to the component (31) which is moved relative to the damper (61) and is to be braked, and exerts a retraction force in the direction towards an end position at the end of the adjustment travel.

2. Steering column according to claim 1, **characterized in that** the limiting device is arranged between the casing unit (3) and the inner casing (31) accommodated therein so as to be adjustable in the longitudinal direction.

3. Steering column according to one of the preceding claims, **characterized in that** the limiting device is arranged between the support unit (2) and the casing unit (3).

4. Steering column according to one of the preceding claims, **characterized in that** a limiting device has two dampers (61) acting in opposite directions of adjustment.

5. Steering column according to one of the preceding claims, **characterized in that** the damper (61) has a linear friction brake.

6. Steering column according to one of the preceding claims, **characterized in that** the damper (61) has a plunger which projects in an adjustment direction and can be moved in a damper housing (63) in the adjustment direction in a speed-damped manner between a contact position and an end position.

7. Steering column according to one of the preceding claims, **characterized in that** the retraction device (64) has a spring element (65) arranged parallel to the damper (61).

8. Steering column according to one of the preceding claims, **characterized in that** the retraction device (64) has a catch device (66).

9. Steering column according to claim 8, **characterized in that** the catch device is switchable between a standby position fixed relative to the damper (61) and a retracted position movable relative to the damper (61).

10. Steering column according to one of the preceding claims, **characterized in that** the sheath unit (3) has a fixing device (5) for releasably fixing the inner sheath (31) and/or the support unit (2).

11. Steering column according to one of the preceding claims,
**characterized in**
**in that** the stop damping device (6, 60) is arranged in such a way that it begins to damp the movement of the inner casing (31) in a position (P), the position (P) being arranged at a distance (s) from one end of the adjustment travel and this distance (s) being greater than or equal to 5% of the adjustment travel.

## Revendications

1. Colonne de direction (1) pour un véhicule automobile, comprenant une unité d'enveloppe (3) maintenue par une unité de support (2), dans laquelle un arbre de direction (4) est logé de manière rotative autour d'un axe longitudinal (L) dans une enveloppe intérieure (31), qui est réglable dans au moins une direction de réglage sur une course de réglage par rapport à l'unité de support (2), au moins un dispositif de limitation destiné à limiter la course de réglage d'un composant (31) à freiner étant disposé entre l'enveloppe intérieure (31) et l'unité de support (2), lequel dispositif de limitation comporte un dispositif d'amortissement de butée (6, 60) qui agit dans la direction de réglage et qui comporte un amortisseur (61) dépendant de la vitesse,
**caractérisé en ce que**
**en ce que** le dispositif d'amortissement de butée (6, 60) comporte un dispositif de rétraction (64) qui comprend un accumulateur d'énergie (65) qui, lorsqu'il atteint le dispositif de limitation, est couplé à l'élément (31) à freiner, déplacé par rapport à l'amortisseur (61), et exerce une force de rétraction en direction d'une position finale à la fin de la course de réglage.

2. Colonne de direction selon la revendication 1, **caractérisée en ce que** le dispositif de limitation est disposé entre l'unité d'enveloppe (3) et l'enveloppe intérieure (31) qui y est logée de manière réglable dans le sens longitudinal.

3. Colonne de direction selon l'une quelconque des revendications précédentes, **caractérisée en ce que** le dispositif de limitation est disposé entre l'unité de support (2) et l'unité d'enveloppe (3).

4. Colonne de direction selon l'une des revendications précédentes, **caractérisée en ce qu'**un dispositif de limitation comporte deux amortisseurs (61) agissant dans des directions de réglage opposées.

5. Colonne de direction selon l'une des revendications précédentes, **caractérisée en ce que** l'amortisseur (61) comporte un frein à friction linéaire.

6. Colonne de direction selon l'une quelconque des revendications précédentes, **caractérisée en ce que** l'amortisseur (61) comporte un poussoir faisant saillie dans une direction de réglage et mobile dans un boîtier d'amortisseur (63) dans la direction de réglage avec amortissement de la vitesse entre une position de contact et une position finale.

7. Colonne de direction selon l'une des revendications précédentes, **caractérisée en ce que** le dispositif d'escamotage (64) comporte un élément de ressort (65) disposé parallèlement à l'amortisseur (61).

8. Colonne de direction selon l'une quelconque des revendications précédentes, **caractérisée en ce que** le dispositif d'escamotage (64) comporte un dispositif d'accrochage (66).

9. Colonne de direction selon la revendication 8, **caractérisée en ce que** le dispositif d'arrêt peut être commuté entre une position d'attente fixe par rapport à l'amortisseur (61) et une position de rétraction mobile par rapport à l'amortisseur (61).

10. Colonne de direction selon l'une des revendications précédentes, **caractérisée en ce que** l'unité d'enveloppe (3) comporte un dispositif de fixation (5) pour fixer de manière amovible l'enveloppe intérieure (31) et/ou l'unité de support (2).

11. Colonne de direction selon l'une quelconque des revendications précédentes,
**caractérisé en ce que**
**en ce que** le dispositif d'amortissement de butée (6, 60) est agencé de manière à commencer à amortir le mouvement de l'enveloppe intérieure (31) dans une position (P), la position (P) étant située à une distance (s) de l'une des extrémités de la course de réglage, cette distance (s) étant supérieure ou égale à 5% de la course de réglage.
